# EUROPÄISCHE PATENTSCHRIFT

(11) **EP 0 623 207 B1**
(45) Veröffentlichungstag und Bekanntmachung des Hinweises auf die Patenterteilung: **06.03.1996**
(21) Anmeldenummer: 92924714.6
(22) Anmeldetag: 11.12.1992
(51) Int. Cl.: G01B 7/30, G01P 3/44, G01P 1/02

(54) **SENSOR**
SENSOR
CAPTEUR

(30) Priorität: 20.01.1992 DE 4201328
(43) Veröffentlichungstag der Anmeldung: 09.11.1994
(73) Patentinhaber: ALFRED TEVES METALLWARENFABRIK GMBH & CO. OHG, D-51702 Bergneustadt (DE)
(72) Erfinder: GOOSSENS, André, F., L., B-2840 Rumst (BE)
(86) Internationale Anmeldenummer: EP9202865
(87) Internationale Veröffentlichungsnummer: WO9314372

(56) Entgegenhaltungen:
- EP-A- 0 194 213
- EP-A- 0 278 806
- EP-A- 0 400 204
- EP-A- 0 464 403
- WO-A-91/04494
- DE-A- 3 827 937
- DE-A- 4 103 947

## Beschreibung

Die Erfindung betrifft einen Sensor zur Messung mechanischer Bewegungsgrößen, insbesondere Drehwinkelsensor für schlupfgeregelte Kraftfahrzeugbremsanlagen und/oder zur Verwendung für Fahrzeuglenkungs- und Fahrzeugfahrwerksregelsysteme nach dem Oberbegriff des Anspruchs 1.

Sensoren in der Funktion von Drehzahlfühler sind beispielhaft in der Schriftenreihe der Robert Bosch GmbH, "PKW-Bremsanlagen mit ABS", erste Ausgabe vom September 1989, Seite 20, erläutert. Diese Drehzahlsensoren arbeiten nach dem Induktionsprinzip. Das Gehäuse ist entweder aus einer Edelstahlhülse oder aus Kunststoff gefertigt, wobei je nach Einbaulage des Sensors ein am Gehäuse überstehender Meißel- oder Rautenpol auf ein an der Radnabe befestigtes Impulsrad gerichtet ist. Der Polstift ist im Gehäuse mit einem Dauermagneten versehen, der als wesentliches Bestandteil des Meßelementes für den Aufbau eines Magnetfeldes und der Induktion einer Spannung innerhalb der auf dem Polstift aufgesetzten Spulenwicklung sorgt, sobald eine Drehung des Impulsrades erfolgt.

Die vorbeschriebenen Drehzahlsensoren haben jedoch den Nachteil, daß zur Gewährleistung einer einwandfreien Funktion besondere Maßnahmen erforderlich sind, die u.a. den Sensor auch vor Schmutz und Feuchtigkeit zu schützen haben. Hierzu gehört das Einfetten der Sensoren und exakte Einstellen des Luftspaltes zwischen dem Impulsrad und Sensor. Desweiteren steht die nur verhältnismäßig unzureichende Miniaturisierung und das relativ hohe Gewicht der bekannten Senoren der Anforderung an eine optimale Integrationsfähigkeit entgegen.

Aus der EP-A-0 278 806 ist ein Sensor zur Messung mechanischer Bewegungsgrößen hervorgegangen, dessen Meßelement mittels einer mit Anschlägen korrespondierenden Innenwandung in einem Gehäusetopf fixiert ist. Der Gehäusetopf beinhaltet eine Vergußmasse, die entlang der Innenwandung verteilt, den Gehäusetopf verschließt. Außer der Meßelementenfixierung durch die Innenwandung verhindert diese das Eindringen der Vergußmasse in den Meßelemtenraum, wozu die Innenwandung bzw. der an der Innenwandung angebrachte Anschlag entsprechend ausgebildet ist, das heißt verstärkt oder zusätzlich mit einem Dichtring versehen ist.

Im beschriebenen Meßaufnehmer bildet der Gehäusetopf in Verbindung mit der Innenwandung eine offene Baugruppe bildet, die erst durch Einspritzen von Vergußmasse in den Innenraum des Gehäusetopfs eine schmutz- und spritzwassergeschützte Einheit herstellt, wobei der relativ hohe Spritzdruck der Vergußmasse über die Innenwandung auf das Meßelement übertragen wird, weshalb nur mechanisch unempfindliche Meßelemente bei der vorgeschlagenen Gehäusekonstruktion verwendet werden können. Die Ausführung der Innenwandung zur Aufnahme der elektrischen Leiter und die Dichtfunktion, die insbesondere durch die Hintereinanderschaltung von Meßelement, Anschlag und Innenwandung vergrößert die Baulänge und ist relativ kompliziert.

Aus der DE 38 27 937 A1 geht ein elektrischer Meßwertaufnehmer hervor, der eine Meßschaltung mit einem Sensorelement aufweist, die von einem Gehäuse umgeben sind. Das Gehäuse ist mit einem kappenartigen Anschlußteil versehen, welches das einen Ende eines Anschlußkabels aufnimmt. Innerhalb des Gehäuses ist die Meßschaltung mit dem Anschlußkabel über ein mehradriges flexibles Leitungsstück verbunden. Das Leitungsstück und das Sensorelement befinden sich auf einem Tragkörper, wobei das Leitungsstück und die aus dem Anschlußteil herausragenden Adern des Anschlußkabels direkt miteinander verbunden sind. Das topfförmige Gehäuse bildet ausschließlich über den aufwendigen Tragkörper, der vom kappenförmigen Anschlußteil gehalten ist, eine aufwendige Baugruppe, in der das Meßelement ausschließlich über die notwendige Verbindung des Tragkörpers mit dem kappenförmigen Anschlußteil eine Funktionseinheit bildet.

In der WO-A-91/04494 ist ein als Drehzahlfühler ausgebildeter Sensor beschrieben. Der Drehzahlfühler hat ein ein elektrisches Bauteile aufnehmendes Gehäuse mit einem ersten Gehäuseteil aus Kunststoff, welches von einem zweiten, in einem Spritzgießvorgang ebenfalls aus Kunststoff erzeugten Gehäuseteil zumindest teilweise umhüllt ist. Zur Erzielung einer feuchtigkeitsdichten, stoffschlüssigen Verbindung beider Gehäuseteile ist in deren Kontaktzone ein Schmelzelement aus einem Kunststoff mit niedrigerem Schmelzpunkt als demjenigen des Kunststoffs der Gehäuseteile angeordnet. Beim Umspritzen des ersten Gehäuseteils wird das Schmelzelement über seinem Schmelzpunkt erwärmt und der Stoffschluß beider Gehäuseteile erzielt. Damit ist das topfförmige Gehäuseteil fester Bestandteil des Trägergehäuses, so daß das Meßelement nur in Verbindung mit dem Trägergehäuse funktionsfähig ist, womit eine universelle funktionsfähige Verwendung des Meßelementes für verschiedene Trägergehäuse ausgeschlossen ist.

Daher ist es die Aufgabe der Erfindung, einen Sensor der vorgenannten Gattung zu schaffen, der sich durch eine besonders gute Eignung zur Miniaturisierung, durch vielseitige Einsatzmöglichkeiten und Integrationsfähigkeit auszeichnet und der schmutz- und spritzwasserunempfindlich jederzeit eine Signalaufbereitung gewährleistet, ohne daß es besondere Justiermaßnahmen und Korrosionsschutzmaßnahmen bedarf.

Diese Aufgabe wird erfindungsgemäß durch die den Patentanspruch 1 kennzeichnenden Merkmale gelöst, sowie durch ein Verfahren zur Herstellung eines derartigen Sensors gemäß den Merkmalen des Patentanspruchs 9.

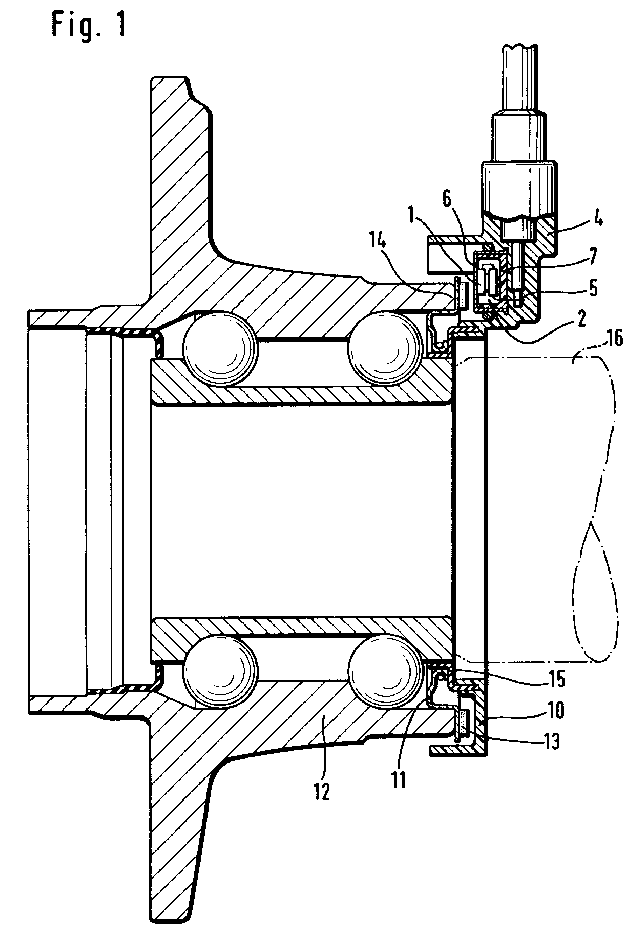

Durch die in den abhängigen Ansprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen (Figur 1 bis 3) näher dargestellt und erläutert werden.

Es zeigen:
- Figur 1: eine Anordnung des Wegsensors mit dem Impulsrad am Radlager,
- Figur 2: einen vergrößerten Teilschnitt der im Wegsensor integrierten Meßeinrichtung,
- Figur 3: eine Schnittdarstellung des aus Figur 2 bekannten Meßelementes.

Die Figur 1 zeigt schematisch skizziert einen aus einem Dünnpreßteil gefertigten Rotor 11, der als Impulsgeber am rotierenden Teil des Radlagergehäuses 12 befestigt ist. In der gezeigten Abbildung weist der Rotor 11 mehrere gleichmäßig über den Umfang verteilte Magnetpolpaare 13 auf (sogenannte äußere Magnetisierung), die form- und/oder kraftschlüssig auf dem als Profilscheibenkörper ausgeführten Rotor 11 befestigt sind. Das Querschnittsprofil des Rotors 11 ist am inneren Bund 14 der Radnabe zentriert und ist derartig z-förmig in Richtung des Radlagers gekröpft, daß der Innenradius des Rotors 11 mit dem Radlagerdichtring 15 abschließt. Gleichzeitig überdeckt das als Kunststoffspritzteil ausgeführte Trägergehäuse 4 den Bund 14 der Radnabe, so daß das Eindringen von Spritzwasser und Schmutz zwischen Rotor 11 und Meßeinrichtung nahezu ausgeschlossen ist. Hierzu ist dieser Abschnitt des Trägergehäuses 4 als Schutzkappe 10 ausgebildet, die bei Anordnung an der angetriebenen Fahrzeugachse, wie im Bild gezeigt, als Abdeckscheibe ausgebildet, beispielsweise von einer Radachse oder von einer Antriebswelle 16 durchdrungen ist.

Es sei darauf hingewiesen, daß anstelle eines Magnetpolpaares aufweisenden Rotors ebenso ein herkömmlicher Zahnkranz verwendet werden kann. Jedoch bedarf es sodann innerhalb des Sensorgehäuses der Anordnung eines Permanentmagneten (sogenannte innere Magnetisierung), was jedoch zu einer aus dem Stand der Technik bekannten, nicht unerheblichen Bauraumvergrößerung des Sensors führen kann.

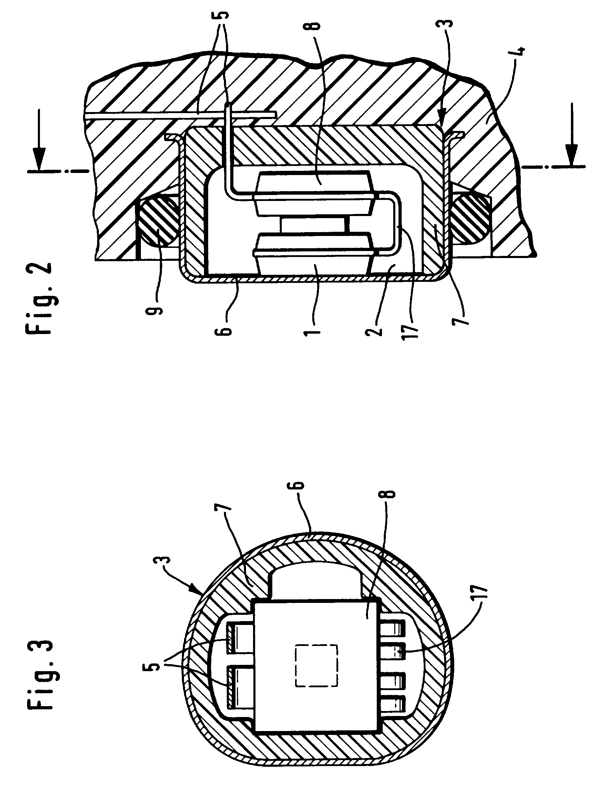

Die Figur 2 zeigt die funktions- und konstruktionrelevanten Elemente des Sensors. Der das Meßelement 1 aufnehmende Meßelementenraum 2 ist aus dem ineinander steckbaren zweiteiligen Gehäuse 3 gebildet, wobei die eine Gehäusehälfte als Topf 6 und die andere Gehäusehälfte als bis auf den Topfboden reichender, einpreßbarer Deckel 7 ausgeführt ist. Der Topf 6 ist vorteilhafterweise als dünnwandiges, metallisches, nicht ferromagnetisches Tiefziehteil ausgebildet. Im besonderen eignet sich hierzu als Korrosionsschutz die Verwendung von austenitischem, rostfreiem Stahl. Der Deckel 7 ist aus einem hochfesten Kunststoff mit hohem Schmelzpunkt, beispielsweise aus Duroplast gefertigt. Im Deckel 7 sind Durchgangsöffnungen vorgesehen, die der Hindurchführung der vom Meßelement 1 bzw. dem IC-Baustein 8 kommenden elektrischen Anschlüssen 5 vorbehalten sind. Die so aus den Gehäusehälften, dem darin befindlichen Meßelement 1 und dem IC-Schaltkreis gebildete Patrone ist nahezu bis zum Gehäuseboden vom Trägergehäuse 4 umschlossen. Das Trägergehäuse 4 wird durch Umspritzen des zweiteiligen Gehäuses 3 mit Kunststoff hergestellt, wobei der Deckel 7 den Spritzdruck aufnimmt und das Eindringen von Kunststoffmasse in den Meßelementenraum 2 verhindert. Ein in dieser Kunststoffmasse eingelegte Stromschiene stellt die elektrische Verbindung zwischen den IC-Anschlüssen und dem peripheren Steckverbinder her. Ein zusätzlicher Schutz gegen Wassereinbruch in Richtung der elektrischen Anschlüsse 5 des Halbleiters 8 ist durch die in die Ringnut am Topf 6 eingepreßte Dichtung 9 gewährleistet. Damit das Meßelement 1 und sein IC-Baustein 8 spielfrei im Topf 6 gehalten sind, kann der Meßelementenraum 2 beispielsweise mit Silikon ausgefüllt werden.

Über die bereits erwähnten Vorteile des Sensors bezüglich Kompaktheit, Spritzwasser- und Schmutzunempfindlichkeit ermöglicht das beschriebene zweiteilige Gehäuse 3 in Form der gezeigten Patrone einen universellen Einsatz, unabhängig von den Gestaltungserfordernissen des Trägergehäuses 4.

Zur Vervollständigung der Erläuterungen wird auf Figur 3 verwiesen, die die beiden aus dem Topf 6 und Deckel 7 gebildeten Gehäusehälften 3 zusammen mit dem Meßelement 1, das zur Anwendung des Hall-Effektes z.B. als Hallelement ausgebildet sein kann und dem räumlich darüber angeordneten IC-Baustein in der Draufsicht zeigen. Das Meßelement 1 und der IC-Baustein 8 sind plattenförmig übereinander geschichtet und über als Filmscharniere ausgebildete Leiterfolien 17 miteinander verbunden. Das Gehäuse weicht auf Grund der speziellen Einbauerfordernissen von der kreisrunden Gehäuseform etwas ab, was anhand der seitlichen Abplattung zu erkennen ist. Desweiteren sind die rechteckigen, als Kontaktzungen ausgebildeten elektrischen Anschlüssen 5 zu erkennen, die durch das Trägergehäuse 4 hindurchgeführt sind.

### Bezugszeichenliste

- 1: Meßelement
- 2: Meßelementenraum
- 3: zweiteiliges Gehäuse
- 4: Trägergehäuse
- 5: elektrische Anschlüsse
- 6: Topf
- 7: Deckel
- 8: Halbleiterbaustein (IC-Baustein)
- 9: Dichtung
- 10: Schutzkappe
- 11: Rotor
- 12: Radlagergehäuse
- 13: Permanentmagnet
- 14: Bund
- 15: Radlagerdichtung
- 16: Antriebswelle
- 17: Leiterfolie

## Patentansprüche

1. Sensor zur Messung mechanischer Bewegungsgrößen, insbesondere Drehwinkelsensor für schlupfgeregelte Kraftfahrzeugbremsanlagen und/oder zur Verwendung für Fahrzeuglenkungs- und Fahrwerksregelsysteme, mit einer vorzugsweise rotatorisch bewegbaren Übertragungseinheit zur Aufnahme der Bewegungsgröße und mit einer feststehenden Meßeinrichtung zur Erzeugung eines den Weg der Übertragungseinheit wiedergebenden elektrischen Signals, wobei die Meßeinrichtung ein Meßelement (1) aufweist, das in einem Meßelementenraum (2) eines zweiteiligen Gehäuses (3) fixiert ist, das von einem Trägergehäuse (4), welches zur Befestigung der Meßeinrichtung und zur Aufnahme von elektrischen Anschlüssen (5) dient, zumindest teilweise umschlossen ist, **dadurch gekennzeichnet**, daß eine Gehäusehälfte des zweiteiligen Gehäuses (3) aus einem Topf (6) und die andere Gehäusehälfte des zweiteiligen Gehäuses (3) als bis auf den Topfboden reichender Rand eines eingepreßten Deckels (7) ausgeführt ist, daß der Deckel (7) den Spritzdruck eines aus Vergußmasse gebildeten Trägergehäuse (4) aufnimmt, wodurch das Eindringen von Vergußmasse in den Meßelementenraum (2) verhindert ist, daß die beiden Gehäusehälften mit dem darin befindlichen Meßelement (1) eine Patrone bilden.

2. Sensor nach Anspruch 1, dadurch **gekennzeichnet,** daß in den Meßelementenraum (2) ein magnetoresistives Meßelement (1) eingefügt ist.

3. Sensor nach Anspruch 1, dadurch **gekennzeichnet,** daß im Meßelementenraum (2) ein Halbleiterbaustein, beispielsweise ein IC-Baustein (8), positioniert ist.

4. Sensor nach Anspruch 1, dadurch **gekennzeichnet**, daß in dem Meßelementenraum (2) ein Hall-Meßelement angeordnet ist, das vorzugsweise mit dem Halbleiterbaustein (8) verbindbar ist.

5. Sensor nach mindestens einem der vorhergehenden Ansprüche, dadurch **gekennzeichnet,** daß das Trägergehäuse (4) zur Aufnahme einer Dichtung (9) im Bereich der Topfwandung eine Ringnut aufweist.

6. Sensor nach mindestens einem der vorhergehenden Ansprüche, dadurch **gekennzeichnet,** daß das Meßelement (1) im Meßelementenraum (2) in einer plastischen Füllmasse, vorzugsweise Silikonmasse eingebettet ist.

7. Sensor nach mindestens einem der vorhergehenden Ansprüche 1 bis 6, dadurch **gekennzeichnet,** daß das an einem Radträger eines Kraftfahrzeugs befestigbare Trägergehäuse (4) zu einer Schutzkappe (10) ausgeformt ist, die den Rotor (11) abdeckt.

8. Sensor nach Anspruch 7, dadurch **gekennzeichnet**, daß der Rotor (11) als im rotierenden Radlagergehäuse (12) integriertes und mit Permanentmagneten (13) versehenes Impulsgeberrad ausgebildet ist.

9. Verfahren zur Herstellung eines Sensors, insbesondere Drehwinkelsensor für schlupfgeregelte Kraftfahrzeugbremsanlagen und/oder zur Verwendung für Fahrzeuglenkungs- und Fahrwerksregelsysteme, mit einer vorzugsweise rotatorisch bewegbaren Übertragungseinheit zur Aufnahme der Bewegungsgröße und mit einer feststehenden Meßeinrichtung zur Erzeugung eines den Weg der Übertragungseinheit wiedergebenden elektrischen Signals, wobei die Meßeinrichtung ein Meßelement (1) aufweist, das in einem Meßelementenraum (2) eines zweiteiligen Gehäuses (3) fixiert ist, das von einem Trägergehäuse (4), welches zur Befestigung der Meßeinrichtung und zur Aufnahme von elektrischen Anschlüssen (5) dient, zumindest teilweise umschlossen ist, insbesondere nach einem der vorhergehenden Ansprüche 1 bis 8, **dadurch gekennzeichnet,** daß:
a) das Meßelement (1) und sein IC-Baustein (8) in einen dünnwandigen metallischen und nicht ferromagnetischen, vorzugsweise aus austenitischem rostfreiem Stahl tiefgezogenen Topf (6) beispielsweise in eine in den Topf (6) zuvor oder nachher eingespritzte plastische Massen, eingelegt wird und mit einem relativ steifen, aus Kunststoff mit hohem Schmelzpunkt, vorzugsweise aus Duroplast gefertigten, bis zum Topfboden reichenden Deckel (7) derart verschlossen wird, daß die elektrischen Anschlüsse (5) des IC-Bausteins (8) durch Öffnungen im Deckel (7) hindurchragen, wobei der Deckel (7) beim Spritzen eines Trägergehäuses (4) den Spritzdruck aufnimmt und den Meßelementenraum (2) vor eindringender Spritzmasse schützt,
b) die aus dem Deckel (7), dem Topf (6), dem Meßelement (1) und dem Halbleiter (8) gebildete Patrone mit Kunststoff derart zu dem Trägergehäuse (4) umspritzt wird, daß im Bereich der Topfwandung eine Ringnut verbleibt, in die nachträglich eine Dichtung (9) eingepreßt wird.

## Claims

1. A sensor for the measurement of mechanical variables of movement, in particular an angle-of-rotation sensor for slip-controlled automotive vehicle brake systems and/or for use in vehicle steering and suspension control systems, including a preferably rotatorily movable transmission unit for sensing the variable of movement and a stationary measuring device for generating an electric signal reproducing the travel of the transmission unit, the measuring device having a measuring element (1) which is fixed within a measuring element chamber (2) of a two-part housing (3), which is surrounded, at least in part, by a carrier housing (4) serving to attach the measuring device and for the accommodation of electric connections (5), **characterized** in that one housing half of the two-part housing (3) is constituted by a cup (6) and the other housing half of the two-part housing (3) is provided as a pressed-in cover (7) which extends down to the cup bottom, in that the cover (7) absorbs the injection-coating pressure of a carrier housing (4) formed of sealing material, whereby the ingress of sealing material into the measuring element chamber (2) is prevented, and in that the two housing halves and the incorporated measuring element (1) form a cartridge.

2. A sensor as claimed in claim 1,
**characterized** in that a magneto-resistive measuring element (1) is inserted into the measuring element chamber (2).

3. A sensor as claimed in claim 1,
**characterized** in that a semiconductor module, for example an IC module (8), is positioned within the measuring element chamber (2).

4. A sensor as claimed in claim 1,
**characterized** in that within the measuring element chamber (2) a Hall measuring element is positioned which is preferably connectible to the semiconductor module (8).

5. A sensor as claimed in at least one of the preceding claims,
**characterized** in that the carrier housing (4) is furnished with an annular groove in the area of the cup wall for the accommodation of a seal (9).

6. A sensor as claimed in at least one of the preceding claims,
**characterized** in that the measuring element (1) is embedded within the measuring element chamber (2) in a mass of plastic filling material, preferably in silicone material.

7. A sensor as claimed in at least one of the preceding claims 1 to 6,
**characterized** in that the carrier housing (4) being fixable to a wheel carrier of an automotive vehicle is shaped so as to form a protecting cap (10) which covers the rotor (11).

8. A sensor as claimed in claim 7,
**characterized** in that the rotor (11) is configured as an impulse transmitter wheel which is integrated in the rotating wheel bearing housing (12) and is provided with permanent magnets (13).

9. A process for the manufacture of a sensor, in particular an angle-of-rotation sensor for slip-controlled automotive vehicle brake systems and/or for use in vehicle steering and suspension control systems, including a preferably rotatorily movable transmission unit for sensing the variable of movement and a stationary measuring device for generating an electric signal reproducing the travel of the transmission unit, the measuring device having a measuring element (1) which is fixed within a measuring element chamber (2) of a two-part housing (3), which is surrounded, at least in part, by a carrier housing (4) serving to attach the measuring device and for the accommodation of electric connections (5), in particular as claimed in anyone of the preceding claims 1 to 8, **characterized** in that:
a) the measuring element (1) and its IC module (8) are deposited in a thin-walled metal and non-ferromagnetic cup (6), preferably being deep-drawn from austenitic stainless steel, for example in a plastic material mass which has previously been or is subsequently injected into the cup (6), and in that they are closed by a relatively rigid cover (7) made of plastic material with an elevated melting point and reaching to the bottom of the cup, preferably of thermoset plastic, in such a manner that the electric connections (5) of the IC module (8) come to project through openings in the cover (7), the cover (7) during injection-moulding of a carrier housing (4) absorbing the injection-coating pressure and protecting the measuring element chamber (3) against the ingress of injection-moulding material,
b) the cartridge which is composed of the cover (7), the cup (6), the measuring element (1) and the semiconductor (8) is injection-coated with plastic material to form the carrier housing (4) such that in the area of the cup wall an annular groove remains, into which a seal (9) is pressed in retroactively.

## Revendications

1. Capteur pour mesurer des grandeurs de déplacement mécanique, notamment capteur d'angle de rotation pour des systèmes de freinage de véhicules automobiles à régulation du glissement et/ou à utiliser pour des systèmes de direction du véhicule et de réglage du châssis, avec une unité de transmission mobile de préférence en rotation pour recevoir la grandeur de déplacement, et avec un dispositif de mesure stationnaire pour produire un signal électrique reproduisant la course de l'unité de transmission, le dispositif de mesure présentant un élément de mesure (1) qui est fixé dans une chambre d'élément de mesure (2) d'un boîtier (3) en deux parties, boîtier qui est au moins partiellement entouré par un boîtier porteur (4) qui sert à la fixation du dispositif de mesure et à recevoir des connexions électriques (5), **caractérisé** en ce qu'une moitié de boîtier du boîtier (3) en deux parties est réalisée sous la forme d'un pot (6), et l'autre moitié de boîtier du boîtier (3) en deux parties est réalisée sous la forme du bord, atteignant le fond du pot, d'un couvercle emmanché (7), en ce que le couvercle (7) reçoit la pression d'injection d'un boîtier porteur (4) constitué d'une masse de scellement, empêchant ainsi la pénétration de masse de scellement dans la chambre d'élément de mesure (2), et en ce que les deux moitiés de boîtier forment une cartouche avec l'élément de mesure (1) qui se trouve à l'intérieur.

2. Capteur selon la revendication 1, **caractérisé** en ce qu'un élément de mesure (1) magnétorésistif est installé dans la chambre d'élément de mesure (2).

3. Capteur selon la revendication 1, **caractérisé** en ce qu'un module semi-conducteur, par exemple un module à circuit intégré (8), est positionné dans la chambre d'élément de mesure (2).

4. Capteur selon la revendication 1, **caractérisé** en ce qu'un élément de mesure à effet Hall, qui peut de préférence être relié au module semi-conducteur (8), est disposé dans la chambre d'élément de mesure (2).

5. Capteur selon au moins une des revendications précédentes, **caractérisé** en ce que le boîtier porteur (4) présente, dans la région de la paroi du pot, une rainure annulaire destinée à recevoir un joint d'étanchéité (9).

6. Capteur selon au moins une des revendications précédentes, **caractérisé** en ce que l'élément de mesure (1) est inséré dans la chambre d'élément de mesure (2) dans une masse de remplissage plastique, de préférence une masse de silicone.

7. Capteur selon au moins une des revendications précédentes 1 à 6, **caractérisé** en ce que le boîtier porteur (4), qui peut être fixé sur un support de roue d'un véhicule automobile, est façonné en un capot de protection (10) qui recouvre le rotor (11).

8. Capteur selon la revendication 7, **caractérisé** en ce que le rotor (11) est réalisé sous la forme d'une roue génératrice d'impulsions qui est incorporée dans le logement rotatif de roulement de roue (12) et est pourvue d'aimants permanents (13).

9. Procédé de fabrication d'un capteur, notamment d'un capteur d'angle de rotation pour des systèmes de freinage de véhicules automobiles à régulation du glissement et/ou à utiliser pour des systèmes de direction du véhicule et de réglage du châssis, avec une unité de transmission mobile de préférence en rotation pour recevoir la grandeur de déplacement, et avec un dispositif de mesure stationnaire pour produire un signal électrique reproduisant la course de l'unité de transmission, le dispositif de mesure présentant un élément de mesure (1) qui est fixé dans une chambre d'élément de mesure (2) d'un boîtier (3) en deux parties, boîtier qui est au moins partiellement entouré par un boîtier porteur (4) qui sert à la fixation du dispositif de mesure et à recevoir des connexions électriques (5), notamment selon l'une quelconque des revendications précédentes 1 à 8, **caractérisé** en ce que
a) l'élément de mesure (1) et son module à circuit intégré (8) sont insérés dans un pot métallique (6) à paroi mince et non ferromagnétique, de préférence un pot réalisé par emboutissage profond en acier austénitique inoxydable, par exemple dans une masse plastique injectée préalablement ou ultérieurement dans le pot (6), et y sont enfermés par un couvercle (7) relativement rigide, s'étendant jusqu'au fond du pot et réalisé en matière plastique à haut point de fusion, de préférence en résine thermodurcissable, de telle sorte que les connexions électriques (5) du module à circuit intégré (8) passent par des ouvertures dans le couvercle (7), le couvercle (7) recevant la pression d'injection lors du moulage par injection d'un boîtier porteur (4) et protégeant la chambre d'élément de mesure (2) de la pénétration de masse injectée,
b) la cartouche formée par le couvercle (2), le pot (6), l'élément de mesure (1) et le semi-conducteur (8) est enrobée par injection de matière plastique pour former le boîtier porteur (4) de telle sorte qu'une rainure annulaire reste présente dans la région de la paroi du pot, rainure dans laquelle est ensuite emmanché un joint d'étanchéité (9).
